# EUROPEAN PATENT APPLICATION

(11) **EP 1 873 565 A2**
(43) Date of publication of application: **02.01.2008**
(21) Application number: 07012371.6
(22) Date of filing: 25.06.2007
(51) Int. Cl.: G02B 6/28, G02F 1/00

(54) **Demodulating a signal using a 1 x m coupler**

(30) Priority: 30.06.2006 US 479826
(71) Applicant: Fujitsu Ltd., Kawasaki-shi, Kanagawa 211-8588 (JP)
(72) Inventor: Tian, Cechan, Plano Texas 75025 (US); Naito, Takao, Kawasaki-shi Kanagawa 211-8588 (JP)
(74) Representative: HOFFMANN EITLE

(57) **Abstract**

A demodulator includes a 1 x m optical coupler and one or more optical device sets. The 1 x m optical coupler splits an input signal comprising symbols to yield m signals comprising m/2 pairs of signals. An optical device set is associated with a pair of signals and includes one or more first optical operators, one or more second optical operators, and a set coupler. The first optical operators direct a first signal of a pair of signals along a first path, and the second optical operators direct a second signal of the pair along a second path. The second path introduces a symbol delay between the first signal and the second signal. The set coupler receives the first and the second signal to generate interference. The interference indicates a phase shift between a phase corresponding to a symbol and a successive phase corresponding to a successive symbol.

## Description

### TECHNICAL FIELD

This invention relates generally to the field of signal communication and more specifically to demodulating a signal using a 1 x m coupler.

### BACKGROUND

Signals may be modulated according to a differential phase-shifted keying (DPSK) digital modulation technique. According to the technique, changes in phase are used to represent bit data. A modulator at a transmitter translates an input bit sequence into phase changes that represent the input bit sequence. A demodulator at a receiver translates the phase changes to retrieve the input bit sequence.

Known techniques for demodulating a signal, however, are not satisfactory in certain situations. Accordingly, these known techniques are not satisfactory in certain situations.

### SUMMARY OF THE DISCLOSURE

In accordance with the present invention, disadvantages and problems associated with previous techniques for demodulating differential phase-shifted keying signals may be reduced or eliminated.

According to one embodiment of the present invention, a demodulator includes a 1 x m optical coupler and one or more optical device sets. The 1 x m optical coupler splits an input signal comprising symbols to yield m signals comprising m/2 pairs of signals. An optical device set is associated with a pair of signals and includes one or more first optical operators, one or more second optical operators, and a set coupler. The first optical operators direct a first signal of a pair of signals along a first path, and the second optical operators direct a second signal of the pair along a second path. The second path introduces a symbol delay between the first signal and the second signal. The set coupler receives the first and the second signal to generate interference. The interference indicates a phase shift between a phase corresponding to a symbol and a successive phase corresponding to a successive symbol.

Certain embodiments of the invention may provide one or more technical advantages. A technical advantage of one embodiment may be that a demodulator includes a 1 x m coupler operable to split a signal into m signals. Use of the 1 x m coupler instead of successive 1 x 2 couplers may reduce the complexity of the demodulator.

Certain embodiments of the invention may include none, some, or all of the above technical advantages. One or more other technical advantages may be readily apparent to one skilled in the art from the figures, descriptions, and claims included herein.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a block diagram illustrating one embodiment of a system for communicating a signal according to a differential phase-shifted keying (DPSK) modulation technique;
FIGURE 2 is a diagram illustrating one embodiment of a demodulator that includes a 1 x m coupler operable to split a signal into m signals;
FIGURE 3 is a block diagram illustrating one example of a demodulator that may be used for 4-PSK demodulation; and
FIGURE 4 is a block diagram illustrating one example of a demodulator that may be used for 8-PSK demodulation.

### DETAILED DESCRIPTION OF THE DRAWINGS

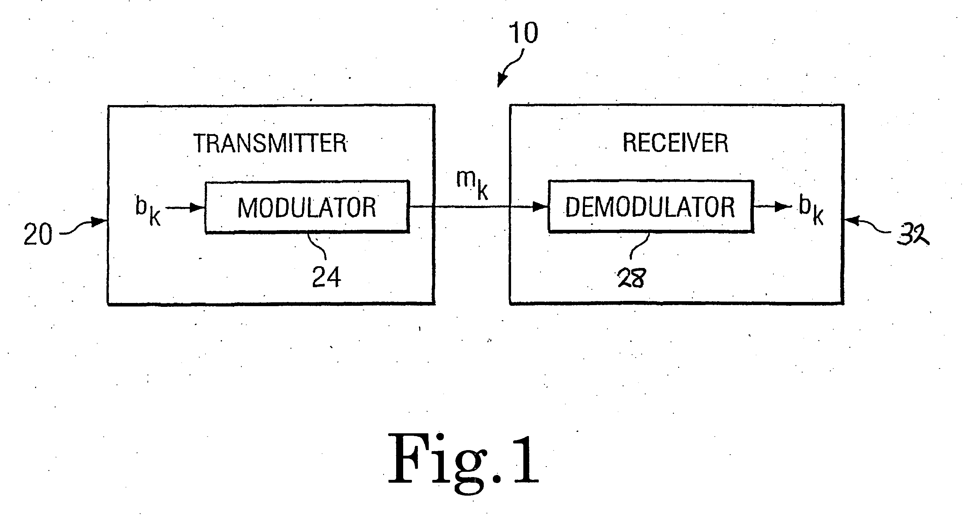

Embodiments of the present invention and its advantages are best understood by referring to FIGURES 1 through 4 of the drawings, like numerals being used for like and corresponding parts of the various drawings.

FIGURE 1 is a block diagram illustrating one embodiment of a system 10 for communicating a signal according to a differential phase-shifted keying (DPSK) modulation technique. According to the embodiment, system 10 includes a demodulator that includes a 1 x m coupler operable to split a signal into m signals. Use of the 1 x m coupler instead of successive 1 x 2 couplers may reduce the complexity of the demodulator.

According to the embodiment, system 10 communicates signals. A signal may refer to an optical signal transmitted as light pulses comprising photons. An optical signal may have a wavelength of approximately 1550 nanometers, and a data rate of, for example, 10, 20, 40, or over 40 gigabits per second. A signal may communicate information in packets. A packet may comprise a bundle of data organized in a specific way for transmission. A packet may carry any suitable information such as voice, data, audio, video, multimedia, other information, or any combination of the preceding.

System 10 includes components that include any suitable arrangement of elements operable to perform the operations of the component, and may comprise logic, an interface, a memory, or any suitable combination of the preceding. "Logic" may refer to hardware, software, other logic, or any suitable combination of the preceding. Certain logic may manage the operation of a device, and may comprise, for example, a processor. "Processor" may refer to any suitable device operable to execute instructions and manipulate data to perform operations.

"Interface" may refer to logic of a device operable to receive input for the device, send output from the device, perform suitable processing of the input or output or both, or any combination of the preceding, and may comprise one or more ports, conversion software, or both. "Memory" may refer to logic operable to store and facilitate retrieval of information, and may comprise Random Access Memory (RAM), Read Only Memory (ROM), a magnetic drive, a disk drive, a Compact Disk (CD) drive, a Digital Video Disk (DVD) drive, removable media storage, any other suitable data storage medium, or a combination of any of the preceding.

According to the illustrated embodiment, system 10 includes a transmitter 20 operable to communicate a signal to a receiver 32. Transmitter 20 includes a modulator 24 that encodes the signal according to DPSK modulation. Receiver 32 includes a demodulator 28 that decodes the encoded signal.

According to the embodiment, modulator 24 receives a signal with input bits bₖ for time slots k. Modulator 24 encodes bits bₖ to yield modulated signal mₖ. Modulator 24 may comprise any suitable modulator, for example, a Mach-Zehner modulator. Modulator 24 may have a laser that emits a continuous wave light beam, and may modulate the light beam to encodes bits bₖ.

Bits bₖ may be encoded according to DPSK modulation where phase shifts between successive symbols represent bits bₖ. According to n-phase-shifted keying (n-PSK) modulation, n different levels of phase shifts may be used to encode p bits per symbol, where n=2^{p}. As an example, according to 4-PSK, or differential quadrature phase-shifted keying (DQPSK), four phase differences are used to encode two bits per symbol. In one case, phase shifts 0°, 90°, 180°, and -90° may be used to encode "00", "01", "11", and "10", respectively. As another example, according to 8-PSK, eight phase differences are used to encode three bits per symbol.

Transmitter 20 transmits modulated signal mₖ to receiver 32. Demodulator 28 of receiver 32 demodulates signal mₖ to reverse the encoding procedure to yield bits bₖ. To demodulate signal mₖ, demodulator 28 compares the phase shifts between successive symbols. Demodulator 28 may split signal mₖ to yield multiple signals. A signal of the multiple signals may be delayed by one symbol to yield a delayed signal. The delayed signal and a nondelayed signal may be overlapped to compare the phases of successive symbols. The phases may be compared by constructively and destructively interfering the overlapped signals. Demodulator 28 may include photodiodes that detect the interference and generate a detector signal representing the interference.

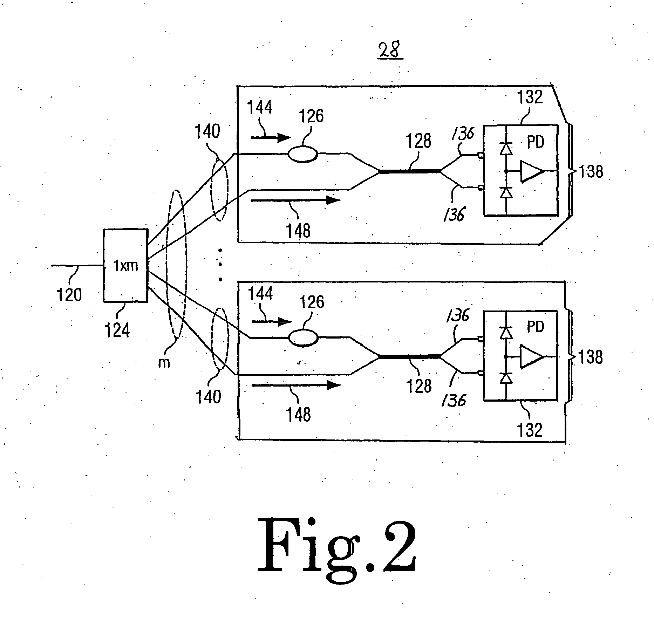

According to one embodiment, demodulator 28 includes a 1 x m coupler operable to split a signal into m signals. Use of the 1 x m coupler instead of successive 1 x 2 couplers may reduce the complexity of demodulator 28. An example of demodulator 28 is described in more detail with reference to FIGURE 2.

Modifications, additions, or omissions may be made to system 10 without departing from the scope of the invention. The components of system 10 may be integrated or separated according to particular needs. Moreover, the operations of system 10 may be performed by more, fewer, or other devices. Additionally, operations of system 10 may be performed using any suitable logic. As used in this document, "each" refers to each member of a set or each member of a subset of a set.

FIGURE 2 is a diagram illustrating one embodiment of a demodulator 28 that includes a 1 x m coupler operable to split a signal into m signals. Use of the 1 x m coupler instead of successive 1 x 2 couplers may reduce the complexity of demodulator 28.

According to the illustrated embodiment, demodulator 28 includes an input 120, a 1 x m coupler 124, a plurality of phase delays 126, a plurality of couplers 128, and a plurality of optical to electric converter(o/e converter) 132 coupled by waveguides 136 as shown. The o/e converter 132 includes photodiodes. Input 120 is operable to receive an input signal. Coupler 124 is operable to split a signal into m signals, or m/2 pairs 140 of signals, and may be embodied in a single optical device. According to one embodiment, m is selected in accordance with level n = 2^{p} of the n-PSK modulation. According to the embodiment, m may be selected as m = 2p.

An optical device set 138 may receive a pair 140 of signals. An optical device set 138 may comprise optical operators operable to communicate, filter, split, reflect, or otherwise process a signal. According to the illustrated embodiment, an optical device set 138 comprises waveguides 136.

A pair 140 of signals travels along paths 144 and 148 of an optical device set 138 to a coupler 128. The difference in the lengths of paths 144 and 148 introduces a relative symbol delay between the signals. The difference may be one symbol length, which may be established from the ratio of the group velocity and the symbol rate. The symbol delay allows for comparison of the phases corresponding to successive symbols. A phase delay 126 of path 144 delays the phase of the signal along path 144. The phase may be delayed to allow for comparison of the phases corresponding to successive symbols. A thin-film heater may be used to adjust the delays.

Coupler 128 combines the signals from paths 144 and 148. o/e converter 132 including photodiodes detect constructive and destructive interference of the combined signals.

Modifications, additions, or omissions may be made to demodulator 28 without departing from the scope of the invention. The components of demodulator 28 may be integrated or separated according to particular needs. Moreover, the operations of demodulator 28 may be performed by more, fewer, or other devices.

In certain embodiments, demodulator 28 may have fewer components than a demodulator that has a coupler for each pair 140 of signals. Accordingly, demodulator 28 may have reduced insertion loss and reduced complexity.

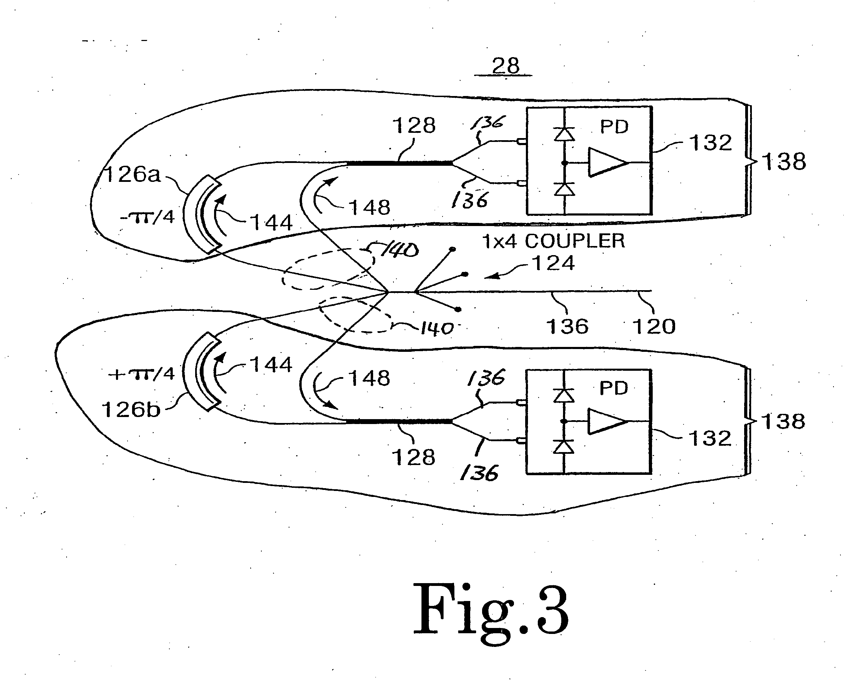

FIGURE 3 is a block diagram illustrating one example of a demodulator 28 that may be used for 4-PSK demodulation. According to the illustrated embodiment, demodulator 28 includes input 120, a 1 x 4 coupler 124, phase delays 126a-b, couplers 128a-b, and o/e converter 132a-b coupled by waveguides 136 as shown. The o/e converter 132a-b includes photodiodes. Phase delay 126a comprises a -π/4 phase delay, and phase delay 126b comprises a +n/4 phase delay.

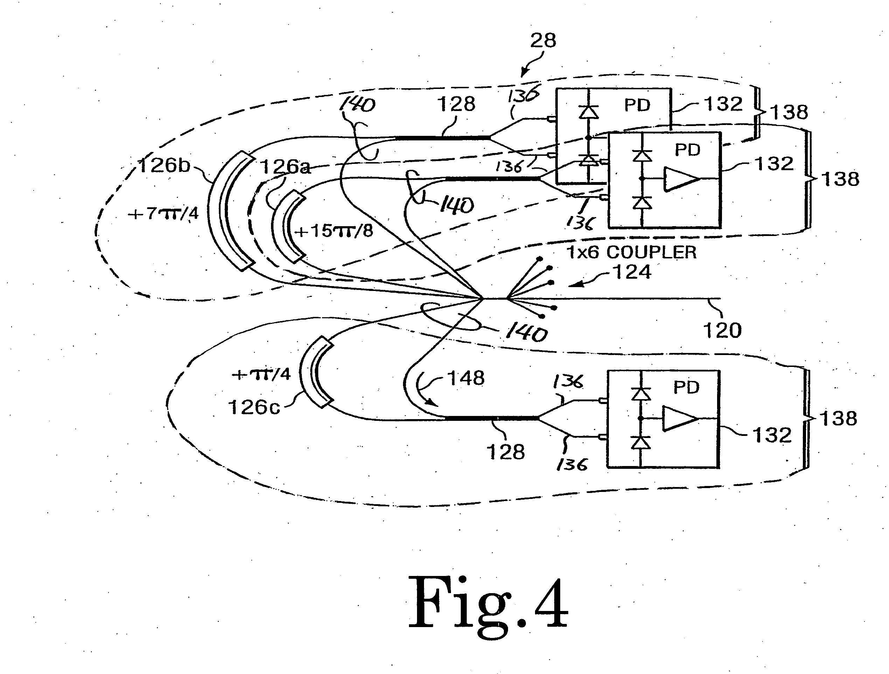

FIGURE 4 is a block diagram illustrating one example of a demodulator 28 that may be used for 8-PSK demodulation. According to the illustrated embodiment, demodulator 28 includes input 120, a 1 x 6 coupler 124, phase delays 126a-c, couplers 128a-c, and o/e converter 132a-c coupled by waveguides 136 as shown. The o/e converter 132a-c includes photodiodes. Phase delay 126a comprises a +15π/8 phase delay, phase delay 126b comprises a +7π/4 phase delay, and phase delay 126c comprises a +n/4 phase delay.

Certain embodiments of the invention may provide one or more technical advantages. A technical advantage of one embodiment may be that a demodulator includes a 1 x m coupler operable to split a signal into m signals. Use of the 1 x m coupler instead of successive 1 x 2 couplers may reduce the complexity of the demodulator.

While this disclosure has been described in terms of certain embodiments, and generally associated methods, alterations and permutations of the embodiments and methods will be apparent to those skilled in the art. Accordingly, the above description of example embodiments does not constrain this disclosure. Other changes, substitutions, and alterations are also possible without departing from the spirit and scope of this disclosure, as defined by the following claims.

## Claims

1. A demodulator operable to demodulate a signal, comprising:
a 1 x m optical coupler operable to split an input signal to yield m signals, the m signals comprising m/2 pairs of signals, the input signal comprising a plurality of symbols;
one or more optical device sets, an optical device set associated with a pair of signals, an optical device set comprising:
one or more first optical operators operable to direct a first signal of a pair of signals along a first path; and
one or more second optical operators operable to direct a second signal of the pair of signals along a second path, the second path introducing a symbol delay between the first signal and the second signal; and
a set coupler operable to receive the first signal and the second signal to generate interference, the interference indicating a phase shift between a phase corresponding to a symbol of the plurality of symbols and a successive phase corresponding to a successive symbol of the plurality of symbols.

2. The demodulator of Claim 1, wherein:
the one or more first optical operators comprises one or more first waveguides; and
the one or more second optical operators comprises one or more second waveguides.

3. The demodulator of Claim 1, wherein the one or more second optical operators further comprises:
a phase delay operable to introduce a phase delay between the first signal and the second signal.

4. The demodulator of Claim 1, wherein an optical device set of the one or more optical device sets further comprises:
a thin-film heater operable to adjust the delay.

5. The demodulator of Claim 1, wherein:
the input signal is modulated according to n-phase-shifted keying modulation, where n = 2^{p}; and
m is 2p.

6. The demodulator of Claim 1, wherein:
the input signal is modulated according to four-phase-shifted keying modulation;
m is four; and
the one or more optical device sets comprises:
a first phase delay operable to introduce a phase delay of +π/4 to a second signal of a first pair; and
a second phase delay operable to introduce a phase delay of -n/4 to a second signal of a second pair.

7. The demodulator of Claim 1, wherein:
the input signal is modulated according to eight-phase-shifted keying modulation;
m is six; and
the one or more optical device sets comprises:
a first phase delay operable to introduce a phase delay of +n/4 to a second signal of a first pair;
a second phase delay operable to introduce a phase delay of +7n/4 to a second signal of a second pair; and
a third phase delay operable to introduce a phase delay of +18n/8 to a second signal of a third pair.

8. The demodulator of Claim 1, an optical device set further comprising a plurality of photodiodes operable to:
detect the interference; and
generate a detector signal representing the phase shift.

9. The demodulator of Claim 1, an optical device set further comprising a plurality of photodiodes operable to detect the interference, the plurality of photodiodes further comprising:
a first photodiode operable to detect destructive interference; and
a second photodiode operable to detect constructive interference.

10. A method for demodulating a signal, comprising:
splitting an input signal at a 1 x m optical coupler to yield.m signals, the m signals comprising m/2 pairs of signals, the input signal comprising a plurality of symbols; and
performing the following at each optical device set of one or more optical device sets, an optical device set associated with a pair of signals:
directing a first signal of a pair of signals along a first path using one or more first optical operators; and
direct a second signal of the pair of signals along a second path using one or more second optical operators, the second path introducing a symbol delay between the first signal and the second signal; and
receiving the first signal and the second signal at a set coupler to generate interference, the interference indicating a phase shift between a phase corresponding to a symbol of the plurality of symbols and a successive phase corresponding to a successive symbol of the plurality of symbols.

11. The method of Claim 10, wherein:
the one or more first optical operators comprises one or more first waveguides; and
the one or more second optical operators comprises one or more second waveguides.

12. The method of Claim 10, further comprising:
introducing a phase delay between the first signal and the second signal.

13. The method of Claim 10, further comprising:
adjusting the delay using a thin-film heater of an optical device set of the one or more optical device sets.

14. The method of Claim 10, wherein:
the input signal is modulated according to n-phase-shifted keying modulation, where n = 2^{p}; and
m is 2p.

15. The method of Claim 10, wherein:
the input signal is modulated according to four-phase-shifted keying modulation;
m is four; and
further comprising:
introducing a phase delay of +π/4 to a second signal of a first pair; and
introducing a phase delay of -π/4 to a second signal of a second pair.

16. The method of Claim 10, wherein:
the input signal is modulated according to eight-phase-shifted keying modulation;
m is six; and
further comprising:
introducing a phase delay of +n/4 to a second signal of a first pair;
introducing a phase delay of +7π/4 to a second signal of a second pair; and
introducing a phase delay of +18π/8 to a second signal of a third pair.

17. The method of Claim 10, further comprising:
detecting the interference; and
generating a detector signal representing the phase shift.

18. The method of Claim 10, further comprising detecting the interference by:
detecting destructive interference; and
detecting constructive interference.

19. A system for demodulating a signal, comprising:
means for splitting an input signal at a 1 x m optical coupler to yield m signals, the m signals comprising m/2 pairs of signals, the input signal comprising a plurality of symbols; and
means for performing the following at each optical device set of one or more optical device sets, an optical device set associated with a pair of signals:
directing.a first signal of a pair of signals along a first path using one or more first optical operators; and
direct a second signal of the pair of signals along a second path using one or more second optical operators, the second path introducing a symbol delay between the first signal and the second signal; and
receiving the first signal and the second signal at a set coupler to generate interference, the interference indicating a phase shift between a phase corresponding to a symbol of the plurality of symbols and a successive phase corresponding to a successive symbol of the plurality of symbols.

20. A demodulator operable to demodulate a signal, comprising:
a 1 x m optical coupler operable to split an input signal to yield m signals, the m signals comprising m/2 pairs of signals, the input signal comprising a plurality of symbols;
one or more optical device sets, an optical device set associated with a pair of signals, an optical device set comprising:
one or more first optical operators operable to direct a first signal of a pair of signals along a first path, the one or more first optical operators comprising one or more first waveguides; and
one or more second optical operators operable to direct a second signal of the pair of signals along a second path, the second path introducing a symbol delay between the first signal and the second signal, the one or more second optical operators comprising one or more second waveguides, the one or more second optical operators further comprising:
a phase delay operable to introduce a phase delay between the first signal and the second signal;
a set coupler operable to receive the first signal and the second signal to generate interference, the interference indicating a phase shift between a phase corresponding to a symbol of the plurality of symbols and a successive phase corresponding to a successive symbol of the plurality of symbols; and
a thin-film heater operable to adjust the delay; and
a plurality of photodiodes operable to:
detect the interference; and
generate a detector signal representing the phase shift, the plurality of photodiodes further comprising:
a first photodiode operable to detect destructive interference; and
a second photodiode operable to detect constructive interference, wherein:
if the input signal is modulated according to n-phase-shifted keying modulation, where n = 2^{p}, then m is 2p;
if the input signal is modulated according to four-phase-shifted keying modulation, then:
m is four; and
the one or more optical device sets comprises:
a' first phase delay operable to introduce a phase delay of +π/4 to a second signal of a first pair; and
a second phase delay operable to introduce a phase delay of -n/4 to a second signal of a second pair;
if the input signal is modulated according to eight-phase-shifted keying modulation, then:
m is six; and
the one or more optical device sets comprises:
a first phase delay operable to introduce a phase delay of +n/4 to a second signal of a first pair;
a second phase delay operable to introduce a phase delay of +7π/4 to a second signal of a second pair; and
a third phase delay operable to introduce a phase delay of +18π/8 to a second signal of a third pair.
